# EUROPÄISCHE PATENTSCHRIFT

(11) **EP 2 172 354 B1**
(45) Veröffentlichungstag und Bekanntmachung des Hinweises auf die Patenterteilung: **27.03.2013**
(21) Anmeldenummer: 09012378.7
(22) Anmeldetag: 30.09.2009
(51) Int. Cl.: B60J 7/06

(54) **Dach mit einem Faltverdeck für einen Personenkraftwagen**
Folding roof for a motor vehicle
Toit repliable pour un véhicule automobile

(30) Priorität: 01.10.2008 DE 102008051707
(43) Veröffentlichungstag der Anmeldung: 07.04.2010
(73) Patentinhaber: Magna Car Top Systems GmbH, 74321 Bietigheim-Bissingen (DE)
(72) Erfinder: Katrini, Waleri, Dipl.-Ing., 74321 Bietigheim-Bissingen (DE); Klein, Berthold, Dipl.-Ing. (FH), 74343 Sachsenheim (DE); Salz, Wolfram, 74343 Sachsenheim (DE); Wolf, Philipp, Dipl.-Ing. (BA), 70191 Stuttgart (DE)
(74) Vertreter: Völger, Silke Beatrix

(56) Entgegenhaltungen:
- EP-A- 0 376 203
- DE-A1- 19 738 279
- DE-A1-102004 017 569
- JP-U- 61 037 019

## Beschreibung

Die Erfindung bezieht sich auf ein Dach mit einem Faltverdeck für einen Personenkraftwagen nach dem Oberbegriff des Patentanspruchs 1. Ein solches Dach ist aus der EP 0376203 A2 bekannt.

Die DE 887 458 behandelt ein zurückschiebbares Verdeck für Kraftwagen, das eine ausgeschnittene Dachfläche abdeckt und aus einer Schließstellung in eine Offenstellung und umgekehrt verstellbar ist. Das Verdeck weist einen Stoffbezug auf, der von sich in Fahrzeugquerrichtung erstreckenden Führungsspriegeln und Faltspriegeln getragen wird. Mittels der Faltspriegel wird der Stoffbezug in der Offenstellung in Falten gelegt.

Aus der DE 40 41 763 C1 geht ein Faltdach für Fahrzeuge zum wahlweisen Verschließen und Freigeben einer in einer festen Dachfläche ausgebildeten Dachöffnung hervor. Das Faltdach umfasst ein Verdeck, das mit einer wechselnden Folge von Falt- und Zwirchenspriegeln verbunden ist. Letztere wirken an beiden Enden mit Längsführungen in Dachseitenträgern eines Aufbaus zusammen.

Es ist Aufgabe der Erfindung an einem Faltverdeck für einen Personenkraftwagen wirkungsoptimierte Führungspriegel und Faltspriegel vorzusehen, welche Faltspriegel in einer Schließstellung des Faltverdecks gezielt mit benachbarten Führungsschienen und Dachseitenträgern eines Aufbaus des Personenkraftwagens zusammenarbeiten.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass dank der Faltspriegelverlängerungen an Enden von letzteren der Verdeckbezug einfach und funktionsgerecht gegen Auflageabschnitte der Führungsschienen und Dichtkörper am Dach des Aufbaus gespannt wird. Die Führungsschienen und die Dichtkörper lassen sich vorbildlich und auch aufwandsarm in das Dach integrieren. Die Auflageabschnitte sind baulich günstig in die Führungsschienen eingearbeitet, die von einer Mittellängsebene des Personenkraftwagens aus betrachtet konstruktiv musterhaft innerhalb der Dichtkörper verlaufen. Jede Faltspriegelverlängerung ist ein leicht realisierbares und wirkungsvolles Bauteil, dessen Halterung im Faltspriegel sicher ist. Ebenso ist die problemlose Montage der Faltspriegelverlängerung hervorzuheben. Schließlich zeichnet sich ein Aufbauträger dadurch aus, dass er die benachbarten Führungsschienen und Dichtkörper karosserietechnisch Beispiel gebend trägt.

In der Zeichnung wird ein Ausführungsbeispiel der Erfindung gezeigt, das nachstehend naher erläutert wird.

### Es zeigen

Fig. 1 eine Schrägansicht von rechts oben auf einen schematisch abgebildeten Personenkraftwagen mit dem Faltverdeck nach der Erfindung,

Fig. 2 eine Ansicht von oben auf das Dach des Personenkraftwagens nach Fig. 1,

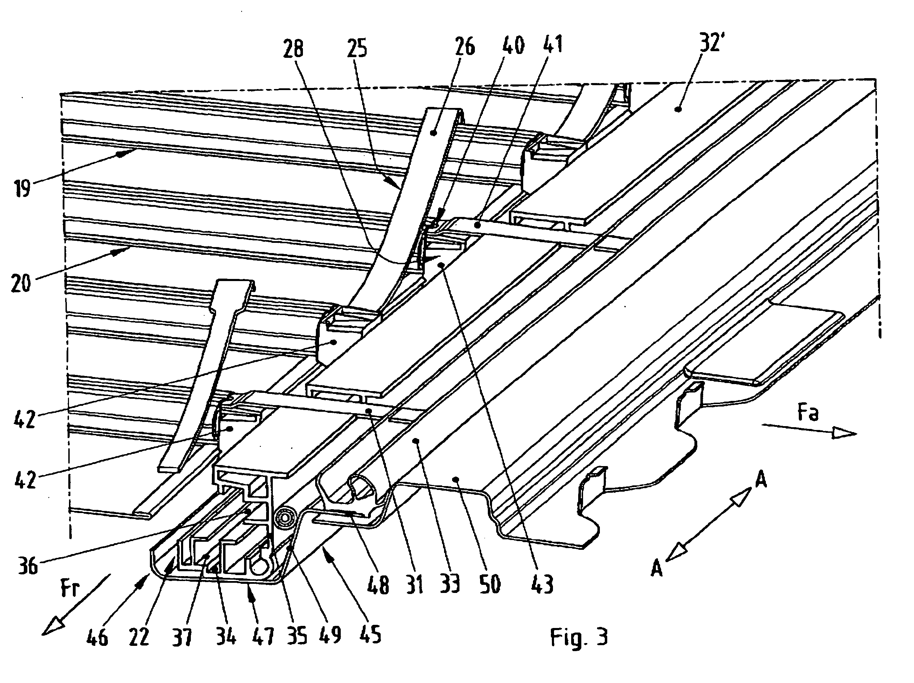

Fig. 3 eine Schrägansicht von vorne rechts oben auf Führungsspriegel, Faltspriegel mit Faltspriegelverlängerungen, eine Führungschiene und einen Dichtkörper des entsprechenden Faltverdecks nach den Fig. 2 und 3,

Fig. 4 eine Schrägansicht von vorne links oben auf einen Führungsspriegel und einen Fattspriegel.

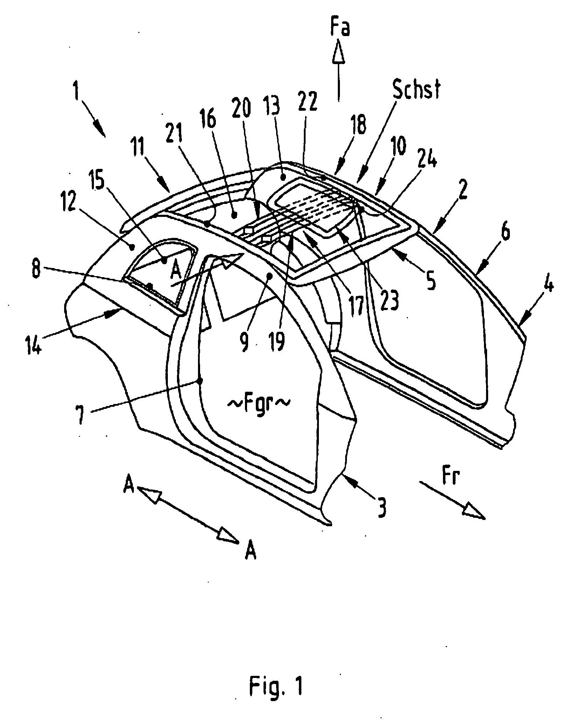

Von einem Personenkraftwagen 1 -Fig. 1- ist lediglich ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenträger 9 und 10, die in einem rückwärtigen Bereich 11 des Aufbaus 2 in Säulen 12 und 13 übergehen und auf eine etwa horizontal verlaufende Gürtellinie 14 des besagten Aufbaus stoßen. Die Dachseitenträger 9 und 10, der vordere Querträger 5 und ein benachbart der Gürtellinie 14 verlaufendes hinteres Querteil 15 des Aufbaus 2 begrenzen eine relativ große Dachöffnung 16, in der ein bewegliches Dach 17 in Fahrzeuglängsrichtung A-A verschlebbar angeordnet ist; die Fahrtrichtung ist mit Fr bezeichnet und eine Heckscheibe mit Hsch.

Das Dach 17 ist nach Art eines Faltverdecks 18 aufgebaut, wie bspw. in der US 3,658,378 und DE 807 474 beschrieben, und zwischen einer Schließstellung Schst und Offenstellung Ost und vice versa bewegbar. In der Offenstellung Ost des Faltverdecks 18 ist letzteres in Falten gelegt, weshalb besagtes Faltverdeck 18 eine Anzahl in Fahrzeugquerrichtung B-B verlaufender mit Abstand zueinander angeordneter Spriegel umfasst. Letztere sind als Führungsspriegel 19 und Faltspriegel 20 ausgebildet, und zwar beide stangenartig. Die Führungsspriegel 19 sind in Führungsschienen 21 und 22 der Dachseltenträger 9 und 10 angeordnet und arbeiten mit einem zur Fahrzeugaußenseite Fa hin weisenden Verdeckbezug 23 sowle einer zum Fahrgastraum Fgr zeigenden Innenverkleidung 24 -auch als Innenhimmel bezeichnetzusammen. Zwischen Verdeckbezug 23 und Innenverkleidung 24, beide bestehen aus flexiblem Material, erstrecken sich die Führungsspriegel 19 und die Faltspriegel 20 -Fig. 1-.

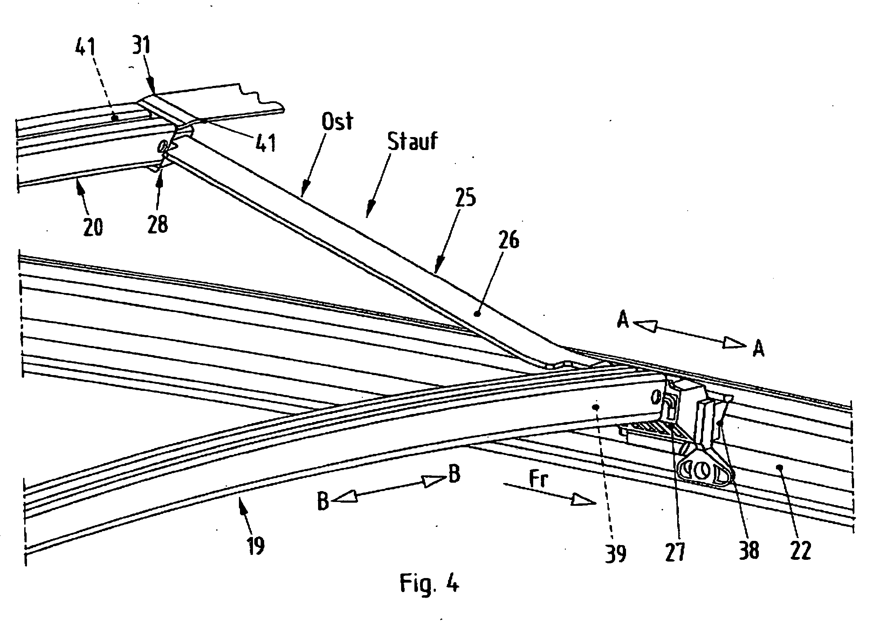

Die Faltspriegel 20 werden unter Zwischenschaltung von in Fahrzeuglängsrichtung A-A verlaufenden Federelementen 25 in der Offenstellung Ost des Faltverdecks 18 in eine aufgestellte Stellung Stauf bewegt -Fig. 4-. Jedes Federelement 26 ist einerseits in einem ersten Endstück 27 des Führungsspriegels 19 und andererseits in einem zweiten Endstück 28 des Faltspriegels 20 formschlüssig in Lage gehalten. Das in einem hohlen Abschnitt des Führungsspriegels 19 ruhende erste Endstück 27 des zuletzt genannten Führungsspriegels 19 Ist in Fahrzeuglängsrichtung A-A verschiebbar in der Führungsschiene 22 gelagert.

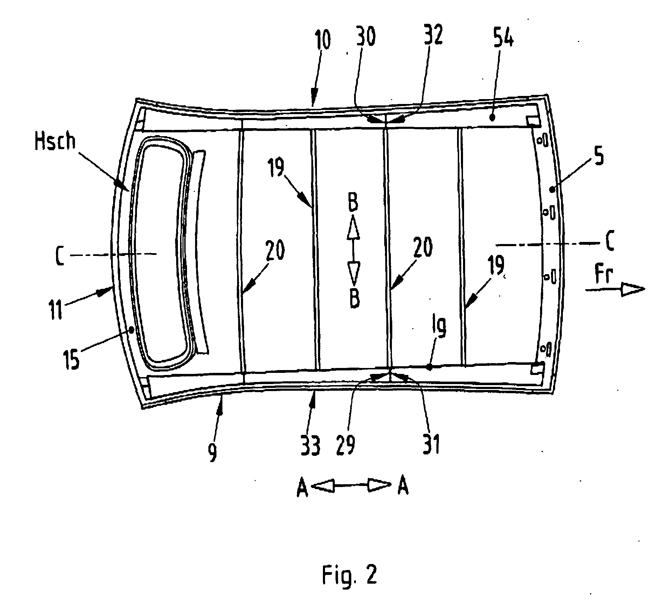

Die Faltspriegel 19 sind an Enden 28 und 29 mit Faltspriegelverlängerungen 30 und 31 versehen, die den Verdeckbezug 23 gegen Auflageabschnitte 32' der Führungsschienen und Dichtkörper 33 spannen. Jeder Auflageabschnitt 32' ist an der Führungsschiene 21 oder 22 vorgesehen und besagter Auflageabschnitt 32 verläuft ausgehend von einer Mittellängsebene C-C -Fig. 2- des Personenkraftwagens 1 Innerhalb des Dichtkörpers 33. Dabei sind die Auflageabschnitte 32 der Führungsschienen 21 und 22 sowie die Dichtkörper 33 in etwa oberflächenbündig zueinander ausgerichtet, und sie sind an den sich in Fahrzeuglängsrichtung A-A erstreckenden Formverlauf des Dachs 17 angepasst.

Jede Führungsschiene 21 oder 22 wird beispielsweise durch ein Strangpressprofil gebildet und umfasst eine Stützplatte 34 und einen aufrechten Steg 35, der wiederum den Auflageabschnitt 32' trägt. In die Führungsschiene 22 sind ein oder mehrere Führungsabschnitte 36 und 37 eingearbeitet, wovon der Führungsabschnitt 36 ein Führungselement 38 des Führungsspriegels 19 aufnimmt. Das Führungselement 38 ist Bestandteil des ersten Endstücks 27, das in einen hohlen Aufnahmeabschnitt 39 des Führungsspriegels 19 eingeführt ist -Fig. 4-.

Die am Faltspriegel 20 angebrachte Faltspriegelverlängerung 31 1st mit einem Halteabschnitt 40 und einem Blattfaderabschnitt 41 versehen, Der Halteabschnitt 40 ist zusammen mit dem zweiten Endstück 28 in einem hohlen Aufnahmeabschnitt 41 im Faltspriegel 20 befestigt -Fig. 4-. Das erste Endstück 27 und das zweite Endstück 28 sind als Verlängerungen 42 und 43 des Führungsspriegels 19 und des Faltspriegels 20 ausgeführt und an die benachbarte Führungsschiene 22 herangeführt, dergestalt, dass die Führungsspriegel 19 und auch die Faltspriegel 20 durch besagte Führungsschiene 22 geführt werden. Zur versenkten Aufnahme des Blattfederabschnitts 41 der Faltspriegelverlängerung 32 ist am Auflageabschnitt 32' der Führungsschiene 22 eine etwa U-förmige in Fahrzeugquerrichtung B-B ausgerichtete Ausnehmung 44 vorgesehen.

Die Führungsschiene 22 und der Dichtkörper 33 werden von einem sich in Fahrzeuglängsrichtung A-A verlaufenden Aufbauträger 45 getragen. Der Aufbauträger 45 besitzt einen profilierten Querschnitt 46 mit abgestuften horizontalen Auflagewänden 47 und 48 für die Führungsschlene 22 und den Dichtkörper 33. Die Auflagewände 45 und 46 bilden zusammen mit einer aufrechten Verbindungswand 49 den Querschnitt 46. Schließlich wird der Dichtkörper 33 zur Fahrzeugaußenseite Fa hin von einem Abdeckelement 50 begrenzt. Das Abdeckelement 50 wird durch einen Profilträger des Aufbaus 2 gebildet.

## Patentansprüche

1. Dach mit einem Faltverdeck (18) für einen Personenkraftwagen (1), das in einer Dachöffnung (16) eines Aufbaus (2) zwischen einer Schließstellung (Schst) und einer Offenstellung (Ost) bewegbar ist, welches Faltverdeck (18) einen Verdeckbezug (23) aufweist, der von in Fahrzeugquerrichtung (B-B) verlaufenden und mit Abstand zueinander angeordneten in Führungsschienen (21, 22) von Dachseitenträgern (9, 10) verschiebbaren Führungsspriegeln (19) und mittels Federelementen (25) aufstellbaren Faltspriegeln (20) getragen wird, wobei die Faltspriegel (20) an Enden (29 und 30) Faltspriegelverlängerungen (31, 32) aufweisen, die den Verdeckbezug (23) gegen einen Auflageabschnitt (32') der Führungsschienen (21, 22) spannen, **dadurch gekennzeichnet, dass** die Faltspriegelverlängerungen (31, 32) den Verdeckbezug (23) außerdem gegen Dichtkörper (33) spannen und dass jedes Federelement (25) einerseits in einem ersten Endstück (27) des jeweiligen Führungsspriegels (19) und andererseits in einem zweiten Endstück (28) des jeweiligen Faltspriegels (20) formschlüssig in Lage gehalten ist.

2. Dach nach Anspruch 1, **dadurch gekennzeichnet, dass** in Fahrzeugquerrichtung (B-B) gesehen jede Führungsschiene (21 und 22) mit dem zugehörigen Auflageabschnitt (32') innerhalb des Dichtkörpers (33) verläuft.

3. Dach nach den Ansprüchen 1 und 2, **dadurch gekennzeichnet, dass** in Fahrzeuglängsrichtung (A-A) gesehen die Führungsschiene (21 und 22) und der Dichtkörper (33) an den Formverlauf des Dachs (17) angepasst sind.

4. Dach nach den Ansprüchen 1 bis 3, **dadurch gekennzeichnet, dass** die Führungsschiene (21 und 22) eine Stützplatte (34) und einen aufrechten Steg (35) umfasst, der den Auflageabschnitt (32') trägt.

5. Dach nach einem oder mehreren der vorangehenden Ansprüche, **dadurch gekennzeichnet, dass** in die Führungsschiene (21 und 22) ein oder mehrere Führungsabschnitte (36 und 37) integriert sind, wovon ein Führungsabschnitt (36) ein Führungselement (38) eines der Führungsspriegel (19) aufnimmt.

6. Dach nach Anspruch 5, **dadurch gekennzeichnet, dass** das Führungselement (38) als ein erstes Endstück (27) ausgeführt und in einen hohlen Aufnahmeabschnitt des Führungsspriegels (19) eingebracht ist.

7. Dach nach Anspruch 1, **dadurch gekennzeichnet, dass** die Faltspriegelverlängerungen (31 und 32) an den Enden (29 und 30) am Faltspriegel (20) befestigt sind.

8. Dach nach den Ansprüchen 1 und 7, **dadurch gekennzeichnet, dass** jede Faltspriegelverlängerung (31 und 32) einen Halteabschnitt (40) und einen mit dem Verdeckbezug (23) verbundenen Blattfederabschnitt (41) umfasst.

9. Dach nach Anspruch 8, **dadurch gekennzeichnet, dass** der Haltabschnitt (40) mit einem zweiten Endstück (28) in einem hohlen Aufnahmeabschnitt (39) im Faltspriegel (20) gehalten ist.

10. Dach nach den Ansprüchen 6 und 9, **dadurch gekennzeichnet, dass** das erste Endstück (27) und das zweite Endstück (28) als Verlängerungen (42 und 43) des Führungsspriegels (19) und des Faltspriegels (20) ausgeführt und an die Führungsschiene (21 und 22) herangeführt sind.

11. Dach nach einem oder mehreren der vorangehenden Ansprüche, **dadurch gekennzeichnet, dass** zur versenkten Aufnahme des Blattfederabschnitts (41) der Faltspriegelverlängerung (31 und 32) am Auflageabschnitt (32) eine Ausnehmung (44) vorgesehen ist.

12. Dach nach einem oder mehreren der vorangehenden Ansprüche, **dadurch gekennzeichnet, dass** die Führungsschiene (21 und 22) und der Dichtkörper (33) von einem sich in Fahrzeuglängsrichtung (A-A) erstreckenden Aufbauträger (45) getragen werden.

13. Dach nach Anspruch 12, **dadurch gekennzeichnet, dass** der Aufbauträger (45) einen profilierten Querschnitt (47) mit Auflagewänden (47) für die Führungsschiene (21 und 22) und den Dichtkörper (33) umfasst, wobei die etwa horizontal ausgerichteten Auflagewände (47 und 48) und eine Verbindungswand (49) den Querschnitt (47) bilden.

14. Dach nach einem oder mehreren der vorangehenden Ansprüche, **dadurch gekennzeichnet, dass** der Dichtkörper (33) zur Fahrzeugaußenseite (Fa) hin von einem Abdeckelement (50) begrenzt wird.

15. Dach nach Anspruch 14, **dadurch gekennzeichnet, dass** das Abdeckelement (50) durch einen Profilträger gebildet wird.

## Claims

1. Folding roof (18) for a motor vehicle (1), said folding roof being movable in a roof opening (16) in a body (2) between a closed position (Schst) and an open position (Ost), which folding top (18) has a top cover (23) which is carried by guide bows (19), which run in the transverse direction (B-B) of the vehicle, are arranged at a distance with respect to one another and are displaceable in guide rails (21, 22) of roof side carriers (9, 10), and by folding bows (20) which are erectable by means of spring elements (25), wherein the folding bows (20) have folding bow extensions (31, 32) at the ends (29 and 30), the folding bow extensions tensioning the top cover (23) against a bearing section (32') of the guide rails (21, 22), **characterized in that** the folding bow extensions (31, 32) also tension the top cover (23) against sealing bodies (33), and **in that** each spring element (25) is held in position in a form-fitting manner at one end in a first end piece (27) of the respective guide bow (19) and at the other end in a second end piece (28) of the respective folding bow (20).

2. Roof according to Claim 1, **characterized in that** each guide rail (21 and 22) together with the associated bearing section (32') runs within the sealing body (33), as seen in the transverse direction (B-B) of the vehicle.

3. Roof according to Claims 1 and 2, **characterized in that** the guide rail (21 and 22) and the sealing body (33) are matched to the shape profile of the roof (17), as seen in the longitudinal direction (A-A) of the vehicle.

4. Roof according to Claims 1 to 3, **characterized in that** the guide rail (21 and 22) comprises a support plate (34) and an upright web (35) which carries the bearing section (32').

5. Roof according to one or more of the preceding claims, **characterized in that** one or more guide sections (36 and 37), of which one guide section (36) receives a guide element (38) of one of the guide bows (19), is or are integrated into the guide rail (21 and 22).

6. Roof according to Claim 5, **characterized in that** the guide element (38) is designed as a first end piece (27) and is introduced into a hollow receiving section of the guide bow (19).

7. Roof according to Claim 1, **characterized in that** the folding bow extensions (31 and 32) are fastened at the ends (29 and 30) to the folding bow (20).

8. Roof according to Claims 1 and 7, **characterized in that** each bolding bow extension (31 and 32) comprises a holding section (40) and a leaf spring section (41) connected to the top cover (23).

9. Roof according to Claim 8, **characterized in that** the holding section (40) is held by a second end piece (28) in a hollow receiving section (39) in the folding bow (20).

10. Roof according to Claims 6 and 9, **characterized in that** the first end piece (27) and the second end piece (28) are designed as extensions (42 and 43) of the guide bow (19) and of the folding bow (20) and are led up to the guide rail (21 and 22).

11. Roof according to one or more of the preceding claims, **characterized in that** a recess (44) is provided for the recessed receiving of the leaf spring section (41) of the folding bow extension (31 and 32) on the bearing section (32).

12. Roof according to one or more of the preceding claims, **characterized in that** the guide rail (21 and 22) and the sealing body (33) are carried by a body carrier (45) extending in the longitudinal direction (A-A) of the vehicle.

13. Roof according to Claim 12, **characterized in that** the body carrier (45) comprises a profiled cross section (47) with bearing walls (47) for the guide rail (21 and 22) and the sealing body (33), wherein the approximately horizontally oriented bearing walls (47 and 48) and a connecting wall (49) form the cross section (47).

14. Roof according to one or more of the preceding claims, **characterized in that** the sealing body (33) is bounded towards the outside (Fa) of the vehicle by a covering element (50).

15. Roof according to Claim 14, **characterized in that** the covering element (50) is formed by a profile carrier.

## Revendications

1. Toit repliable (18) pour un véhicule automobile (1), qui peut être déplacée dans une ouverture du toit (16) d'une carrosserie (2) entre une position de fermeture (Schst) et une position d'ouverture (Ost), laquelle capote pliante (18) présente un revêtement de capote (23) qui est porté par des arceaux de guidage (19) s'étendant dans la direction transversale du véhicule (B-B), déplaçables dans des rails de guidage (21, 22) de supports latéraux de toit (9, 10) et disposés à distance les uns des autres, et par des arceaux pliants (20) pouvant être dressés au moyen d'éléments de ressort (25), les arceaux pliants (20) présentant aux extrémités (29 et 30) des prolongements d'arceau pliant (31, 32) qui serrent le revêtement de capote (23) contre une portion d'appui (32') des rails de guidage (21, 22), **caractérisé en ce que** les prolongements d'arceau pliant (31, 32) serrent le revêtement de capote (23) en outre contre des corps d'étanchéité (33) et **en ce que** chaque élément de ressort (25) est maintenu par engagement par correspondance géométrique d'une part dans un premier embout (27) de l'arceau de guidage respectif (19) et d'autre part dans un deuxième embout (28) de l'arceau pliant respectif (20).

2. Toit selon la revendication 1, **caractérisé en ce que** vu dans la direction transversale du véhicule (B-B), chaque rail de guidage (21 et 22) s'étend avec une portion d'appui associée (32') à l'intérieur du corps d'étanchéité (33).

3. Toit selon les revendications 1 et 2, **caractérisé en ce que** vu dans la direction longitudinale du véhicule (A-A), le rail de guidage (21 et 22) et le corps d'étanchéité (33) sont adaptés à la forme du toit (17).

4. Toit selon les revendications 1 à 3, **caractérisé en ce que** le rail de guidage (21 et 22) comprend une plaque de support (34) et une nervure dressée (35) qui porte la portion d'appui (32').

5. Toit selon l'une quelconque ou plusieurs des revendications précédentes, **caractérisé en ce qu'**une ou plusieurs portions de guidage (36 et 37) sont intégrées dans le rail de guidage (21 et 22), dont une portion de guidage (36) reçoit un élément de guidage (38) de l'un des arceaux de guidage (19).

6. Toit selon la revendication 5, **caractérisé en ce que** l'élément de guidage (38) est réalisé sous forme de premier embout (27) et est introduit dans une portion de réception creuse de l'arceau de guidage (19).

7. Toit selon la revendication 1, **caractérisé en ce que** les prolongements de l'arceau pliant (31 et 32) sont fixés aux extrémités (29 et 30) sur l'arceau pliant (20).

8. Toit selon les revendications 1 et 7, **caractérisé en ce que** chaque prolongement d'arceau pliant (31 et 32) comprend une portion de retenue (40) et une portion de ressort à lame (41) connectée au revêtement de capote (23).

9. Toit selon la revendication 8, **caractérisé en ce que** la portion de retenue (40) est retenue avec un deuxième embout (28) dans une portion de réception creuse (39) dans l'arceau pliant (20).

10. Toit selon les revendications 6 et 9, **caractérisé en ce que** le premier embout (27) et le deuxième embout (28) sont réalisés sous forme de prolongements (42 et 43) de l'arceau de guidage (19) et de l'arceau pliant (20) et sont approchés du rail de guidage (21 et 22).

11. Toit selon l'une quelconque ou plusieurs des revendications précédentes, **caractérisé en ce que** pour recevoir de manière renfoncée la portion de ressort à lame (41) du prolongement d'arceau pliant (31 et 32), il est prévu un évidement (44) sur la portion d'appui (32).

12. Toit selon l'une quelconque ou plusieurs des revendications précédentes, **caractérisé en ce que** le rail de guidage (21 et 22) et le corps d'étanchéité (33) sont portés par un support de carrosserie (45) s'étendant dans la direction longitudinale du véhicule (A-A).

13. Toit selon la revendication 12, **caractérisé en ce que** le support de carrosserie (45) comprend une section transversale profilée (47) avec des parois d'appui (47) pour le rail de guidage (21 et 22) et le corps d'étanchéité (33), les parois d'appui (47 et 48) orientées approximativement horizontalement et une paroi de liaison (49) formant la section transversale (47).

14. Toit selon l'une quelconque ou plusieurs des revendications précédentes, **caractérisé en ce que** le corps d'étanchéité (33) est limité vers le côté extérieur du véhicule (Fa) par un élément de recouvrement (50).

15. Toit selon la revendication 14, **caractérisé en ce que** l'élément de recouvrement (50) est formé par un support profilé.
